# EUROPÄISCHE PATENTSCHRIFT

(11) **EP 2 733 063 B1**
(45) Veröffentlichungstag und Bekanntmachung des Hinweises auf die Patenterteilung: **07.10.2015**
(21) Anmeldenummer: 13192160.3
(22) Anmeldetag: 08.11.2013
(51) Int. Cl.: B64C 3/52, B64C 9/24

(54) **Morphingstruktur für eine Flügelvorderkante**
Morphing structure for a wing leading edge
Structure de morphing pour un bord d'attaque d'une aile d'avion

(30) Priorität: 12.11.2012 DE 102012110805
(43) Veröffentlichungstag der Anmeldung: 21.05.2014
(73) Patentinhaber: Deutsches Zentrum für Luft- und Raumfahrt e.V., 51147 Köln (DE)
(72) Erfinder: Heintze, Dr. Olaf, 38162 Cremlingen (DE); Kintscher, Markus, 38114 Braunschweig (DE)
(74) Vertreter: REHBERG HÜPPE + PARTNER

(56) Entgegenhaltungen:
- EP-A2- 2 256 032
- WO-A2-2007/145718
- US-A1- 2006 145 031

## Beschreibung

### TECHNISCHES GEBIET DER ERFINDUNG

Die Erfindung bezieht sich auf eine Flügelvorderkante mit einer verformbaren Haut, die an ihren beiden Enden an eine tragende Struktur angeschlossen ist und die einen Faserverbund mit Verstärkungsfasern in unterschiedlicher Orientierung aufweist, und mit mindestens einem in der Flügelvorderkante wirksamen Aktuator, mit dem die Haut in einem Bereich längs der Flügelvorderkante verlaufenden Bereich gegenüber der tragenden Struktur auslenkbar ist, um die Flügelvorderkante umzuformen.

Insbesondere bezieht sich die vorliegende Erfindung auf eine Flügelvorderkante für einen Tragflügel, die zumindest zwischen einer Reiseflugstellung und einer Hochauftriebsstellung verformbar ist, wobei die Hochauftriebsstellung das Konzept einer Senknase (droop nose) verwirklicht.

### STAND DER TECHNIK

Eine Flügelvorderkante mit den Merkmalen der eingangs beschriebenen Art, die dem Oberbegriff des unabhängigen Patentanspruchs 1 entspricht, ist aus O. Heintze et al.: "Die Vorbereitung der Faserverbundstruktur einer flexiblen und spaltfreien Flügelvorderkante auf ihren ersten großskaligen Bodenversuch", Deutsche Luft- und Raumfahrt Kongress DGLR 2010, 31.08.-02.09.2010, Hamburg, Deutschland bekannt. Auch das Dokument EP-A-2 256 032 zeigt eine derartige Flügelvorderkante. Der Aktuator wirkt hier über einen Stringer derart auf die Haut gegenüber der tragenden Struktur ein, dass sich ein Nasenradius der Flügelvorderkante vergrößert und auf die Haut eine reine Biegebelastung wirkt. Es sollen so Membrandehnungen der Haut weitgehend vermieden werden, da sonst hohe Dehnungen der Außenfasern durch die Verformung auftreten würden. Die Haut ist aus einem Faserverbund so gestaltet, dass sie in Bereichen großer Verformung eine minimale Stärke aufweist. Unter der Annahme, dass reine Biegedehnungen durch die Verformung des vorderen Bereichs der Flügelvorderkante auftreten, weist die Haut am Anschluss an die tragende Struktur die größte Stärke auf, die dann bis zur Nasenspitze beständig dünner wird. Die schrittweise Verringerung der Stärke der Haut wird im Fertigungsprozess durch auslaufende Faserlagen realisiert. Der hauptsächliche Teil der Verformung der Flügelvorderkante wird über einen einzelnen Stringer auf der Unterseite eingeleitet. Weitere Stringer im vorderen Bereich der Flügelvorderkante und an ihrer Oberseite dienen zur Wahrung der Formhaltigkeit unter zu erwartenden Luftlasten. Der Faserverbund der bekannten Flügelvorderkante weist wegen ihrer größeren Bruchdehnung insbesondere Glasfasern als Verstärkungsfasern auf. Innerhalb jeder Faserlage sind die Verstärkungsfasern gleich gerichtet, und zwischen benachbarten Lagen ändert sich ihre Richtung um jeweils 45°. Kohlenstofffasern können ebenfalls als Verstärkungsfasern Verwendung finden. Hierdurch wird zwar eine höhere Steifigkeit erreicht, aber eine deutlich verringerte Materialdehnung.

Eine weitere Flügelvorderkante mit den Merkmalen des Oberbegriffs des unabhängigen Patentanspruchs 1 ist aus der WO 2007/145718 A2 bekannt. Bei dieser Flügelvorderkante weist die verformbare Haut zwischen ihren beiden an die tragende Struktur angeschlossenen Enden eine variable Dicke auf, um gewünschte Nachgiebigkeitseigenschaften zu erreichen. Die WO 2007/145718 A2 offenbart weiterhin eine Flügelhinterkante. Bei dieser Flügelhinterkante nimmt die Dicke der Haut von ihren beiden an eine tragende Struktur angeschlossenen Enden zu einem hinteren Bereich hin ab. Dies wird realisiert, indem ein die Haut ausbildender Faserverbund Lagen von Verstärkungsfasern aufweist, die teilweise bereits vor dem hinteren Bereich enden.

Bei den bekannten Flügelvorderkanten stellt sich heraus, dass das Konzept einer reinen Biegebelastung der Haut, die sich unter Einfluss des nur punktuell auf die Haut wirkenden Aktuators aufrollt und so ohne weiteres ihre neue Form annimmt, bei der ein anderer Bereich der Haut den vordersten Bereich, d. h. die Nasenspitze der Flügelvorderkante ausbildet, aufgrund der Materialeigenschaften der Haut noch unzulänglich umgesetzt ist. So ist die Gefahr eines Einwölbens der Haut an ihrer Unterseite beim Umformen der Flügelvorderkante in ihre Hochauftriebsstellung, die auch das größte Manko früherer verformbarer Flügelvorderkanten ist, noch nicht ganz beseitigt.

Aus der DE 20 2009 006 966 U1 sind Verbundbauteile aus wärmehärtenden Harzen und Elastomeren bekannt, die jeweils von einer dünnen harten Kunststoff-Außenschicht, einer daran nach innen anschließenden Elastomerschicht und einer daran nach innen anschließenden Kunststoff-Trägerschicht aus einem faserverstärkten Kunststoff ausgebildet sind und als Aufprall-Schutzteil an der Vorderkante eines Flügels angeordnet sind oder diese zumindest teilweise ausbilden. Die Elastomerschicht kann als Kernschicht im Bereich der neutralen Faser des Kunststoff-Verbundbauteils angeordnet sein. An diese Kernschicht können nach außen mehrere Schichten aus Faserverbundwerkstoff anschließen, die eine glatte, harte Oberfläche bilden. Die Kernschicht aus Elastomer macht das Bauteil gegenüber reinen Faserverbundwerkstoffbauteilen leichter, da das spezifische Gewicht der relativ dicken Elastomerschicht geringer ist als das des Faserverbundwerkstoffs. Gegenüber Faserverbundbauteilen mit Distanzstegen zwischen zwei Decklagen sollen mit der Kernschicht aus dem Elastomer Vorteile in Bezug auf das Impakt-Verhalten und den Vibrationsschutz bzw. das Dämpfungsverhalten gegen Bauteilschwingungen oder ein integrierter Splitterschutz erreicht werden.

Aus der US 2010/0151186 A1 ist ein Faserverbundbauteil bekannt, das erste und zweite Schichten aus faserverstärkter Harzmatrix und eine dazwischen angeordnete viskoelastische Konstruktion umfasst, die an die Harzmatrizes angebunden ist. Die viskoelastische Konstruktion umfasst mindestens eine viskoelastische Schicht und mindestens eine Barriereschicht, die im wesentlichen impermeabel ist. Die viskoelastische Schicht soll ein großes Spitzendämpfungsverhältnis im Schermodus aufweisen. Die Impermeabilität der Barriereschicht soll gegenüber organischen Lösungsmitteln und/oder Wasser und/oder Gasen gegeben sein. Die Verstärkungsfasern können Glasfasern oder Kohlenstofffasern sein. Die Harzmatrix kann ein thermisch härtendes oder thermoplastisches Material sein. Die Barriereschicht der viskoelastischen Konstruktion kann auf beiden Seiten der viskoelastischen Schicht angeordnet sein und ebenfalls aus einem Elastomerwerkstoff bestehen.

### AUFGABE DER ERFINDUNG

Der Erfindung liegt die Aufgabe zugrunde, eine Flügelvorderkante mit den Merkmalen des Oberbegriffs des Patentanspruchs 1 aufzuzeigen, bei der das Konzept einer Senknase in der Hochauftriebsstellung ohne die Gefahr einer Einwölbungen der Haut selbst bei Ausbildung einer ausgeprägten Senknase umsetzbar ist.

### LÖSUNG

Erfindungsgemäß wir die Aufgabe durch eine Flügelvorderkante mit den Merkmalen des unabhängigen Patentanspruchs 1 gelöst. Bevorzugte Ausführungsformen der neuen Flügelvorderkante sind in den abhängigen Patentansprüchen 2 bis 14 beschrieben. Der Patentanspruch 15 ist auf ein Flugzeug mit mindestens einem Tragflügel gerichtet, der die neue Flügelvorderkante aufweist. Wenn das Flugzeug wie üblich zwei Tragflügel aufweist, weist jeder dieser Tragflügel die neue Flügelvorderkante auf.

### BESCHREIBUNG DER ERFINDUNG

Bei einer Flügelvorderkante mit einer verformbaren Haut, die an ihren beiden Enden an eine tragende Struktur angeschlossen ist und die einen Faserverbund mit Verstärkungsfasern in unterschiedlicher Orientierung aufweist, und mindestens einem in der Flügelvorderkante wirksamen Aktuator, mit dem die Haut in einem längs der Flügelvorderkante verlaufenden Bereich gegenüber der tragenden Struktur auslenkbar ist, um die Flügelvorderkante umzuformen, weist der Faserverbund im Bereich einer neutralen Faser der Haut eine schubweiche Zwischenlage aus einem Elastomerwerkstoff auf. Aufgrund dieser schubweichen Zwischenlage können die sich durch die Zwischenlage voneinander getrennten außen und innen liegenden Teile des Faserverbunds in Richtung zwischen den beiden Enden der Haut begrenzt gegeneinander verschieben, ohne dass bei dieser Scherung hohe elastische Kräfte zu überwinden sind. Dabei sind unter den Enden der Haut deren längs der Flügelvorderkante verlaufenden Bereiche zu verstehen, mit denen die verformbare Haut in Richtung der Umströmung des jeweiligen Tragflügels endet und hinter denen in eben dieser Richtung Teile liegen, welche gegenüber der tragenden Struktur des jeweiligen Tragflügels nicht gezielt auslenkbar sind.

Auch Variationen des Abstands zwischen diesen inneren und äußeren Teilen des Faserverbunds sind aufgrund der Verformbarkeit des Elastomerwerkstoffs der Zwischenlage möglich. In jedem Fall verhindert die Zwischenlage das Aufbauen großer elastischer Rückstellkräfte in der Haut, die ihrer zielgerichteten Verformung durch punktuellen Angriff des Aktuators entgegenstehen. In Bezug auf diese Verformungen kann man den inneren und äußeren Teil der Haut als getrennt betrachten, so dass die neue Flügelkante nur die vernachlässigbar geringe Neigung zu Einwölbungen an ihrer Unterseite beim Einnehmen ihrer Hochauftriebsstellung hat, wie eine Flügelvorderkante mit für hohe aerodynamische Belastungen grundsätzlich zu dünner Haut. Diese aerodynamischen Belastungen werden jedoch bei der neuen Flügelvorderkante durch beide Teile des Faserverbunds, d. h. seinen inneren und seinen äußeren Teil abgetragen. Indem die schubweiche Zwischenlage aus dem Elastomerwerkstoff in der neutralen Faser der Außenhaut verläuft, trennt sie die auf Zug und Druck beanspruchten Teile der Haut, wird aber selbst nicht relevant auf Zug oder Druck in der Richtung zwischen den Enden der Haut beansprucht, was zu Lasten ihrer Schubweichheit ginge. Dabei ist mit der neutralen Faser der Außenhaut wie üblich keine reale Faser gemeint, sondern der Bereich der Außenhaut, der bei reiner Biegebeanspruchung weder eine Dehnung noch eine Stauchung erfährt, sondern in seiner Länge gleich bleibt.

Eine solche neutrale Faser findet sich typischerweise in der Mitte der Haut. Dies gilt zumindest dann, wenn der Faserverbund einen zu einer in der Mitte der Haut verlaufenden Symmetrieebene symmetrischen Aufbau aufweist. Insbesondere kann der Faserverbund also einen zu der schubweichen Zwischenlage symmetrischen Schichtaufbau aufweisen.

Der Faserverbund kann an den Enden der Haut in Lagen angeordnete Verstärkungsfasern aufweisen, wobei die Verstärkungsfasern in jeder Lage gleich gerichtet sind und sich die Richtung der Verstärkungsfasern zwischen benachbarten Lagen um jeweils 45° ändert. Vorzugsweise ändert sich die Richtung der Verstärkungsfasern von der schubweichen Zwischenlage weg jeweils gleichsinnig um 45°. So ergibt sich beispielsweise von der schubweichen Zwischenlage weg eine wiederkehrende Abfolge der Richtungen der Verstärkungsfasern in aufeinanderfolgenden Lagen von 45°, 90°, - 45° und 0°. Dieser Lagenaufbau ist an den Enden der Haut gegeben, an denen sie an die tragende Struktur angebunden ist. Von beiden Enden der Haut zu einem vorderen Bereich der Flügelvorderkante nimmt eine Verstärkungsfaserflächendichte in dem Faserverbund jedoch ab. Diese Abnahme ist idealerweise stetig. Praktisch wird sie jedoch dadurch umgesetzt, dass einzelne Faserlagen auslaufen. Hierdurch entfallen einzelne Lagen in der oben genannten Abfolge. Der vordere Bereich der Flügelvorderkante, in dem die Verstärkungsfaserdichte in dem Faserverbund minimal ist, ist der Bereich, in dem sich eine Nasenspitze der Flügelvorderkante bei ihrer Umformung von ihrer Reiseflugstellung in ihre Hochauftriebsstellung bewegt.

Zudem kann dadurch, dass die Verstärkungsfaserdichte auf einer Oberseite der Flügelvorderkante weiter entfernt von der tragenden Struktur und/oder schneller abnimmt als auf einer Unterseite der Flügelvorderkante, dem Rechnung getragen werden, dass die Biegeverformung der Haut beim Umformen der Flügelvorderkante in ihre Hochauftriebsstellung tendenziell größer ist als auf der Oberseite. In dem vorderen Bereich der Flügelvorderkante, in dem die Verstärkungsfaserflächendichte minimal ist, können insbesondere Verstärkungsfasern weggelassen sein, die längs der Flügelvorderkante verlaufen. Hingegen erstrecken sich zumindest einige der anderen Lagen der Verstärkungsfasern mit Orientierungen von 0° und ± 45° zwischen den beiden Enden durch den vorderen Bereich der Flügelvorderkante hindurch. Vorzugsweise sind dies Lagen, die an den Enden der Haut außen in dem Faserverbund liegen.

Die Verstärkungsfasern des Faserverbunds auf beiden Seiten der schubweichen Zwischenlage sind vorzugsweise Glasfasern, weil diese eine höhere Elastizität als Kohlenstofffasern aufweisen. Der Faserverbund kann jedoch zusätzlich eine Seele auf der Basis von Kohlenstofffasern aufweisen, die sich längs der neutralen Faser erstreckt und in die schubweiche Zwischenschicht eingebettet sein kann.

Auf seiner Außenseite kann der Faserverbund von einer eine Außenoberfläche der Flügelvorderkante ausbildenden Metallhülle bedeckt sein. Dabei kann zwischen dem Faserverbund und der Metallhülle eine weitere schubweiche Zwischenlage aus einem Elastomerwerkstoff angeordnet sein, um auch ein Einbeulen oder sonstiges Einwölben der Außenhaut durch Einfluss der Metallhülle zu verhindern.

Auf seiner Innenseite kann der Faserverbund mit schlagzähem thermoplastischen Kunststoff belegt sein, um die Schlagfestigkeit der Flügelvorderkante zu verbessern.

Der mindestens eine Aktuator der neuen Flügelvorderkante greift typischerweise über einen in dem auszulenkenden Bereich längs der Flügelvorderkante verlaufenden Stringer an der Haut an. Weitere längs der Flügelvorderkante verlaufende Stringer können in der Flügelvorderkante angebracht und an der tragenden Struktur abgestützt sein, um die Flügelvorderkante gegenüber aerodynamischen Belastungen auszusteifen. Dabei kann diese Abstützung eine bewegliche Abstützung sein, die die Bewegung der Haut zwischen der Reiseflugstellung und der Hochauftriebsstellung der Flügelvorderkante zulässt. Die Abstützung kann aber auch eine lösbare Abstützung sein, die für die Verformung der Flügelvorderkante gelöst wird und in der dann jeweils wunschgemäß erreichten Stellung wieder blockiert wird.

Die neue Flügelvorderkante ist insbesondere für einen Tragflügel eines Flugzeugs vorgesehen. Grundsätzlich kann sie aber auch an einem Rotorblatt eines Hubschraubers, eines Propellers oder einer Turbine oder dergleichen realisiert werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Die Erfindung wird im Folgenden unter Bezugnahme auf die beigefügten Zeichnungen näher erläutert und beschrieben.
- **Fig. 1**: ist ein schematischer Querschnitt durch eine erfindungsgemäße Flügelvorderkante.
- **Fig. 2**: illustriert eine erste Ausführungsform eines Schichtaufbaus der erfindungsgemäßen Flügelvorderkante; und
- **Fig. 3**: illustriert eine zweite Ausführungsform des Schichtaufbaus der erfindungsgemäßen Flügelvorderkante.

### FIGURENBESCHREIBUNG

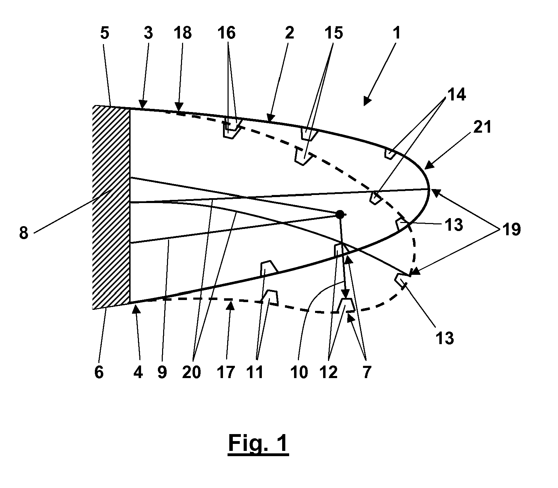

Die in Fig. 1 in einem Querschnitt dargestellte Flügelvorderkante 1 weist eine Haut 2 auf, die an ihren Enden 3 und 4 an einer tragenden Struktur 8 befestigt ist. Die Haut 2 geht an den Enden 3 und 4 nahtlos in eine obere Flügeloberfläche 5 bzw. eine untere Flügeloberfläche 6 über. Die Haut 2 weist einen Faserverbund mit einem Schichtaufbau auf, der anhand der folgenden Figuren näher erläutert werden wird. Die Flügelvorderkante 1 ist aus ihrer mit durchgezogener Linie dargestellten Reiseflugstellung in eine mit gestrichelter Linie dargestellte Hochauftriebsstellung verformbar. Dazu wird mit einem im Inneren der Flügelvorderkante wirksamen Aktuator ein Bereich 7 der Haut 2 nach unten ausgelenkt. Der Aktuator ist gegenüber der tragenden Struktur 8 wirksam und ist hier nur in Form eines von einem Ausleger 9 der tragenden Struktur 8 ausgehenden, auf den ausgelenkten Bereich 7 gerichteten Pfeils 10 dargestellt. An der Innenseite der Haut 2 sind Stringer 11 bis 16 angebracht, Der Aktuator wirkt auf den Stringer 12 ein, der relativ weit vorne an einer Unterseite 17 der Flügelvorderkante vorgesehen ist. Die anderen Stringer 11 und 13 bis 16, die wie der Stringer 12 längs der Flügelvorderkante verlaufen, werden infolge der Auslenkung des Stringers 12 ebenfalls ausgelenkt, ohne dass es hierzu zusätzlicher Kräfte auf einen der Stringer 11 und 13 bis 16 bedürfte. Vielmehr ist der Stringer 12, auf den der Aktuator 10 einwirkt, so angeordnet und die Haut 2 bezüglich ihrer Elastizitätseigenschaften so aufgebaut, dass die Flügelvorderkante 1 infolge der Einwirkung des Aktuators 10 auf den Stringer 12 aus ihrer Reiseflugstellung in ihre Hochauftriebsstellung überführt wird. Sowohl in der Reiseflugstellung als auch in der Hochauftriebsstellung können die Stringer 11 bis 16 aber zusätzlich an der tragenden Struktur 8 abgestützt sein, was hier nicht dargestellt ist. Durch den Aufbau der Haut 2 wird insbesondere bewirkt, dass sich die Haut 2 bei der Umformung der Flügelvorderkante infolge der Einwirkung des Aktuators 10 nur durch Biegung verformt und derart aufrollt, dass die Nasenspitze 19 der Flügelvorderkante 1 zwischen deren Reiseflugstellung und Hochauftriebsstellung über einen vorderen Bereich 21 wandert, d. h. jeweils von anderen Teilen der Haut 2 ausgebildet wird. Dabei wird hier als Nasenspitze 19 der Punkt bezeichnet, an dem eine Skelettlinie 20 der Flügelvorderkante 1 die Haut 2 kreuzt. Konkret wandert die Nasenspitze 19 bei der Umformung von der Reiseflugstellung in die Hochauftriebsstellung von dem Stringer 14 weg zu dem Stringer 13. An der Unterseite 17 der Flügelvorderkante tritt auch zwischen dem Stringer 12 und dem Ende 4 keine Einwölbung der Haut 2 auf, die ein ungewolltes Abweichen von der angestrebten Hochauftriebsstellung bedeuten würde. Beim Übergang von der Reiseflugstellung in die Hochauftriebsstellung wird das Profil der Flügelvorderkante 1 bauchiger.

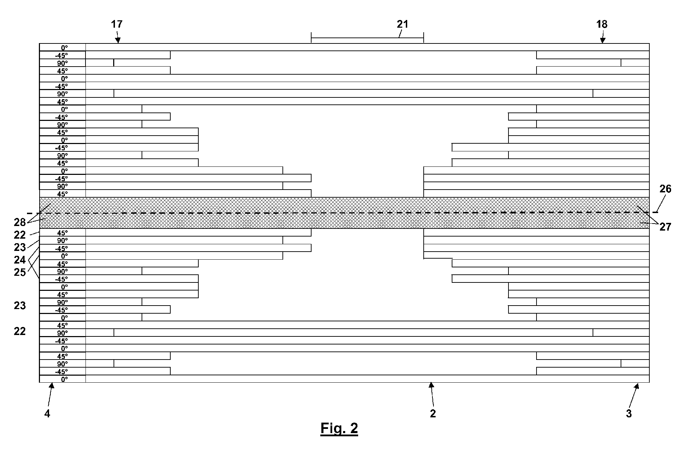

Fig. 2 illustriert eine Ausführungsform eines Schichtaufbaus des Faserverbunds der Haut 2. Dabei ist der Schichtaufbau geradlinig von dem unteren Ende 4 zu dem oberen Ende 3 der Haut 2 abgewickelt und in Längenrichtung gegenüber der Dickenrichtung erheblich verkürzt dargestellt. Zudem sind einzelne Lagen 22 bis 25 von unidirektionalen Verstärkungsfasern der Haut 2 auch dann geradlinig durchgehend dargestellt, wenn zwischen ihnen liegende Lagen bereits ausgelaufen sind. so dass sie sich eigentlich an eine Symmetrieebene 26 des Schichtaufbaus annähern müssten. Eingezeichnet sind neben der Unterseite 17 und der Oberseite 18 der Flügelvorderkante, die auch ihre Außenseite markieren, der vordere Bereich 21, in dem sich die Nasenspitze 19 gemäß Fig. 1 bewegt.

In dem Bereich 21 ist die tatsächliche Dicke des Schichtaufbaus der Haut 2 am geringsten, weil bis dahin 4/5 der Lagen 22 bis 25, die an den Enden 3 und 4 beginnen, ausgelaufen sind. Der Schichtaufbau, d. h. die Abfolge der Lagen 22 bis 25 mit unterschiedlicher Orientierung ihrer unidirektionalen Verstärkungsfasern ist symmetrisch zu der Symmetrieebene 26. Von der Symmetrieebene 26 weg ändert sich die Orientierung der Verstärkungsfasern in benachbarten Lagen 22 bis 25 um jeweils 45° in derselben Richtung. Zwischen den Enden 4 und 3 laufen auf beiden Seiten der Symmetrieebene 6 zwei äußere Lagen geradlinig durch (Faserorientierung 0°) sowie zwei Lagen mit geneigter Faserorientierung, d. h. Faserorientierung 45° und - 45°. Unmittelbar im Bereich der Symmetrieebene 26 sind keine Verstärkungsfasern, bei denen es sich hier um Glasfasern handelt, sondern eine schubweiche Zwischenlage 27 aus Elastomerwerkstoff 28 vorgesehen. Diese schubweiche Zwischenlage 27 erlaubt eine Relativbewegung des äußeren, hier oberen Teils der Haut 2 gegenüber dem inneren, hier unteren Teil der Haut 2 in Richtung zwischen den Enden 4 und 3. Die schubweiche Zwischenschicht weist eine typische Dicke im Bereich weniger zehntel Millimeter bis 1 Millimeter, d. h. von etwa 1/2 Millimeter auf. Die Dicke der einzelnen Lagen 22 bis 25 der Haut 2 liegt bei etwa einem Zehntelmillimeter.

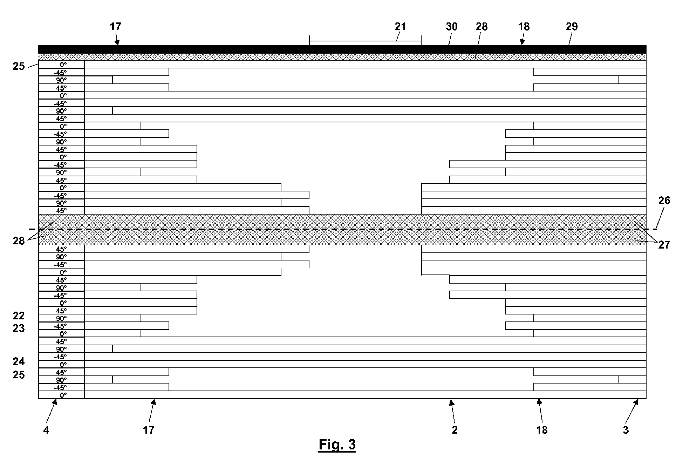

Die in Fig. 3 dargestellte Ausführungsform des Schichtaufbaus der Haut 2 weist zusätzlich zu dem Schichtaufbau gemäß Fig. 2 auf ihrer Außenseite eine Metallhülle 29 auf, die unter Zwischenordnung einer weiteren schubweichen Zwischenschicht 30 als Elastomerwerkstoff 28 auf der äußeren Lage 25 angeordnet ist. Die gegenüberliegende Innenseite der Haut 2 kann mit einem hier nicht dargestellten schlagzähen thermoplastischen Kunststoff belegt sein.

Das Auslaufen der Lagen 22 bis 25 an der Unterseite 17 erfolgt langsamer und damit über eine größere Strecke der Haut 2 zwischen den Enden 4 und 3 als auf der Oberseite 18 der Flügelvorderkante. An der Oberseite 18 ist die Haut über eine größere Strecke von dem Ende 3 ausgehend durch alle oder zumindest fast alle der Lagen 22 bis 25, die von ihrem Ende 3 ausgehen, verstärkt. So wird durch die abnehmende Flächenkonzentration der Verstärkungsfasern nicht nur der Bereich 21 ausgebildet, in dem sich die Nasenspitze 19 der Flügelvorderkante bewegt, sondern es wird auch die Verformbarkeit der daran angrenzenden Bereiche auf die angestrebte Profilform der Flügelvorderkante in ihrer Hochauftriebsstellung angepasst.

### BEZUGSZEICHENLISTE

- 1: Flügelvorderkante
- 2: Haut
- 3: Ende
- 4: Ende
- 5: Flügeloberfläche
- 6: Flügeloberfläche
- 7: Bereich
- 8: tragende Struktur
- 9: Ausleger
- 10: Pfeil / Aktuator
- 11: Stringer
- 12: Stringer
- 13: Stringer
- 14: Stringer
- 15: Stringer
- 16: Stringer
- 17: Unterseite
- 18: Oberseite
- 19: Nasenspitze
- 20: Skelettlinie
- 21: vorderer Bereich
- 22: Lage
- 23: Lage
- 24: Lage
- 25: Lage
- 26: Symmetrieebene
- 27: Zwischenlage
- 28: Elastomerwerkstoff
- 29: Metallhülle
- 30: Zwischenlage

## Patentansprüche

1. Flügelvorderkante (1) mit
- einer tragenden Struktur (8),
- einer verformbaren Haut (2),
- die an ihren beiden Enden (3, 4) an der tragenden Struktur (8) angeschlossen ist und
- die einen Faserverbund mit Verstärkungsfasern in unterschiedlicher Orientierung aufweist, und
- mindestens einem in der Flügelvorderkante (1) wirksamen Aktuator (10),
- mit dem die Haut (2) in einem längs der Flügelvorderkante (1) verlaufenden Bereich (7) gegenüber der tragenden Struktur (8) auslenkbar ist,
- um die Flügelvorderkante (1) umzuformen,
**dadurch gekennzeichnet, dass** der Faserverbund im Bereich einer neutralen Faser der Haut (2) eine schubweiche Zwischenlage (27) aus einem Elastomerwerkstoff (28) aufweist.

2. Flügelvorderkante (1) nach Anspruch 1, **dadurch gekennzeichnet, dass** der Faserverbund einen zu der schubweichen Zwischenlage (27) symmetrischen Aufbau aufweist.

3. Flügelvorderkante (1) nach einem der vorhergehenden Ansprüche, **dadurch gekennzeichnet, dass** der Faserverbund an den Enden (3, 4) der Haut (2) in Lagen (22-25) angeordnete Verstärkungsfasern aufweist, wobei die Verstärkungsfasern in jeder Lage (22-25) gleichgerichtet sind und sich die Richtung der Verstärkungsfasern zwischen benachbarten Lagen um jeweils 45° ändert.

4. Flügelvorderkante (1) nach Anspruch 3, **dadurch gekennzeichnet, dass** sich die Richtung der Verstärkungsfasern von der schubweichen Zwischenlage (27) weg von Lage zu Lage (22-25) jeweils gleichsinnig um 45° ändert.

5. Flügelvorderkante (1) nach einem der vorhergehenden Ansprüche, **dadurch gekennzeichnet, dass** eine Verstärkungsfaserflächendichte in dem Faserverbund von beiden Enden (3, 4) der Haut (2) zu einem vorderen Bereich (21) der Flügelvorderkante (1) abnimmt.

6. Flügelvorderkante (1) nach Anspruch 5, **dadurch gekennzeichnet**, das s die Verstärkungsfaserflächendichte in dem Faserverbund zu dem vorderen Bereich (21) der Flügelvorderkante (1) hin stetig abnimmt.

7. Flügelvorderkante (1) nach Anspruch 5 oder 6, **dadurch gekennzeichnet, dass** die Verstärkungsfaserflächendichte in dem Faserverbund zu dem vorderen Bereich (21) der Flügelvorderkante (1) durch auslaufende Faserlagen (22-25) abnimmt.

8. Flügelvorderkante (1) nach Anspruch 5, 6 oder 7, **dadurch gekennzeichnet, dass** die Verstärkungsfaserflächendichte auf einer Oberseite (18) der Flügelvorderkante (1) weiter entfernt von der tragenden Struktur (8) und/oder schneller abnimmt als auf einer Unterseite (17) der Flügelvorderkante (1).

9. Flügelvorderkante (1) nach einem der vorhergehenden Ansprüche, **dadurch gekennzeichnet, dass** der Faserverbund in dem vorderen Bereich (21) der Flügelvorderkante (1) keine Verstärkungsfasern aufweist, die längs der Flügelvorderkante (1) verlaufen.

10. Flügelvorderkante (1) nach einem der vorhergehenden Ansprüche, **dadurch gekennzeichnet, dass** die Verstärkungsfasern des Faserverbunds auf beiden Seiten der schubweichen Zwischenlage (27) Glasfasern sind.

11. Flügelvorderkante (1) nach einem der vorhergehenden Ansprüche, **dadurch gekennzeichnet, dass** der Faserverbund eine CFK-Seele aufweist.

12. Flügelvorderkante (1) nach einem der vorhergehenden Ansprüche, **dadurch gekennzeichnet, dass** der Faserverbund auf seiner Außenseite (18) von einer eine Außenoberfläche der Flügelvorderkante (1) ausbildenden Metallhülle (29) bedeckt ist, wobei zwischen dem Faserverbund und der Metallhülle (29) eine weitere schubweiche Zwischenlage (30) aus einem Elastomerwerkstoff (28) angeordnet ist.

13. Flügelvorderkante (1) nach einem der vorhergehenden Ansprüche, **dadurch gekennzeichnet, dass** der Faserverbund auf seiner Innenseite mit schlagzähem thermoplastischen Kunststoff belegt ist.

14. Flügelvorderkante (1) nach einem der vorhergehenden Ansprüche, **dadurch gekennzeichnet, dass** der mindestens eine Aktuator (10) über einen in dem Bereich (7) längs der Flügelvorderkante (1) verlaufenden Stringer (12) an der Haut (2) angreift, wobei optional weitere längs der Flügelvorderkante (1) verlaufende Stringer (11, 13-16) in der Flügelvorderkante (1) an der Haut (2) angebracht sind, die an der tragenden Struktur (8) abgestützt sind.

15. Flugzeug mit mindestens einem Tragflügel, der eine Flügelvorderkante (1) nach einem der vorhergehenden Ansprüche aufweist.

## Claims

1. Wing leading edge (1) comprising
- a supporting structure (8),
- a deformable skin (2),
- which, at both of its ends (3, 4), is connected to the supporting structure (8) and
- which has a fibre composite comprising reinforcing fibres of different orientations, and
- at least one actuator (10) effective in the wing leading edge (1)
- by which the skin (2), in an area (7) extending along the wing leading edge (1), is deflectable with regard to the supporting structure (8)
- to deform the wing leading edge (1),
**characterised in that** the fibre composite, in the area of a neutral axis of the skin (2), comprises a intermediate layer (27) made of an elastomeric material (28) and being soft in shear.

2. Wing leading edge (1) of claim 1, **characterised in that** the fibre composite is of a symmetrical construction with regard to the intermediate layer (27) soft in shear.

3. Wing leading edge (1) according to any of the preceding claims, **characterised in that** the fibre composite, at the ends (3, 4) of the skin (2), comprises reinforcing fibres arranged in layers (22-25), wherein the reinforcing fibres in each layer (22-25) are oriented in a same direction, and wherein the direction of the reinforcing fibres in each case varies by 45° between neighbouring layers.

4. Wing leading edge (1) of claim 3, **characterised in that** the direction of the reinforcing fibres, away from the intermediate layer (27) soft in shear, in each case varies by 45° in a same direction layer by layer (22-25).

5. Wing leading edge (1) according to any of the preceding claims, **characterised in that** a reinforcing fibre density in the fibre composite decreases from both ends (3, 4) of the skin (2) towards a front area (21) of the wing leading edge (1).

6. Wing leading edge (1) of claim 5, **characterised in that** the wing reinforcing fibre density in the fibre composite continuously decreases towards the front area (21) of the wing leading edge (1).

7. Wing leading edge (1) of claim 5 or 6, **characterised in that** the reinforcing fibre density within the fibre composite decreases towards the front area (21) of the wing leading edge (1) by fibre layers (22-25) running out.

8. Wing leading edge (1) of claim 5, 6 or 7, **characterised in that** the reinforcing fibre density at the upper side (18) of the wing leading edge (1) decreases further away from the supporting structure (8) and/or quicker than at the lower side (17) of the wing leading edge (1).

9. Wing leading edge (1) of any of the preceding claims, **characterised in that** the fibre composite, in the front area (21) of the wing leading edge (1), does not comprise reinforcing fibres running along the wing leading edge (1).

10. Wing leading edge (1) of any of the preceding claims, **characterised in that** the reinforcing fibres of the fibre composite on both sides of the intermediate layer (27) soft in shear are glass fibres.

11. Wing leading edge (1) of any of the preceding claims, **characterised in that** the fibre composite has a core made of carbon fibre reinforced plastic.

12. Wing leading edge (1) of any of the preceding claims, **characterised in that** the fibre composite, at its outside (18), is covered by a metal cover making up an outer surface of the wing leading edge (1), wherein a further intermediate layer (30) made of elastomeric material (28) and being soft in shear is arranged between the fibre composite and the metal cover (29).

13. Wing leading edge (1) of any of the preceding claims, **characterised in that** the fibre composite, at its inside, is covered by an impact resistant thermoplastic resin.

14. Wing leading edge (1) of any of the preceding claims, **characterised in that** the at least one actuator (10) engages the skin (2) via at least one stringer (12) extending along the wing leading edge (1) in the area (7), wherein, optionally, further stringers (11, 13-16) extending along the wing leading edge (1) are attached to the skin (2) within the wing leading edge (1), which are supported at the supporting structure (8).

15. Air plane comprising a wing leading edge (1) according to any of the preceding claims.

## Revendications

1. Bord d'attaque (1) d'une aile comportant:
- une structure porteuse (8),
- une peau (2) déformable,
- qui, par ses deux extrémités (3, 4), est attachée à la structure porteuse (8), et
- qui comporte un matériau composite renforcé par des fibres, comportant des fibres de renfort dans une orientation différente, et
- au moins un actionneur (10) agissant dans le bord d'attaque (1),
- par lequel la peau (2) peut être déviée par rapport à la structure porteuse (8) dans une zone (7) s'étendant le long du bord d'attaque (1) de l'aile,
- afin de transformer le bord d'attaque (1),
**caractérisé en ce que** le matériau renforcé par des fibres comporte, dans la zone d'une fibre neutre de la peau (2), une couche intermédiaire (27) à faible cisaillement en matériau élastomère (28).

2. Bord d'attaque (1) d'une aile selon la revendication 1, **caractérisé en ce que** le matériau renforcé par des fibres comporte une structure symétrique à la couche intermédiaire (27) à faible cisaillement.

3. Bord d'attaque (1) d'une aile selon l'une quelconque des revendications précédentes, **caractérisé en ce que** le matériau renforcé par des fibres comporte des fibres de renfort disposées en couches (22-25) aux extrémités (3, 4) de la peau (2), les fibres de renfort étant orientées dans la même direction dans chaque couche (22-25) et la direction des fibres de renfort variant respectivement de 45° entre des couches adjacentes.

4. Bord d'attaque (1) d'une aile selon la revendication 3, **caractérisé en ce que** la direction des fibres de renfort s'écartant de la couche intermédiaire (27) à faible cisaillement varie d'une couche à l'autre (22-25) respectivement de 45° dans le même sens.

5. Bord d'attaque (1) d'une aile selon l'une quelconque des revendications précédentes, **caractérisé en ce que** la densité surfacique des fibres de renfort dans le matériau renforcé par des fibres diminue à partir des deux extrémités (3, 4) de la peau (2) vers une zone avant (21) du bord d'attaque (1) de l'aile.

6. Bord d'attaque (1) d'une aile selon la revendication 5, **caractérisé en ce que** la densité surfacique des fibres de renfort dans le matériau renforcé par des fibres diminue en continu vers la zone avant (21) du bord d'attaque (1) de l'aile.

7. Bord d'attaque (1) d'une aile selon la revendication 5 ou 6, **caractérisé en ce que** la densité surfacique des fibres de renfort dans le matériau renforcé par des fibres diminue vers la zone avant (21) du bord d'attaque (1) de l'aile au moyen de couches de fibres (22-25) finissantes.

8. Bord d'attaque (1) d'une aile selon la revendication 5, 6 ou 7, **caractérisé en ce que** la densité surfacique des fibres de renfort sur une face supérieure (18) du bord d'attaque (1) de l'aile diminue en un point davantage éloigné de la structure porteuse (8) et/ou plus vite que sur une face inférieure (17) du bord d'attaque (1) de l'aile.

9. Bord d'attaque (1) d'une aile selon l'une quelconque des revendications précédentes, **caractérisé en ce que** le matériau renforcé par des fibres, dans la zone avant (21) du bord d'attaque (1) de l'aile, ne comporte pas de fibres de renfort qui s'étendent le long du bord d'attaque (1) de l'aile.

10. Bord d'attaque (1) d'une aile selon l'une quelconque des revendications précédentes, **caractérisé en ce que** les fibres de renfort du matériau renforcé par des fibres sur les deux faces de la couche intermédiaire (27) à faible cisaillement sont des fibres de verre.

11. Bord d'attaque (1) d'une aile selon l'une quelconque des revendications précédentes, **caractérisé en ce que** le matériau renforcé par des fibres comporte une âme en matière plastique renforcée par des fibres de carbone.

12. Bord d'attaque (1) d'une aile selon l'une quelconque des revendications précédentes, **caractérisé en ce que** le matériau renforcé par des fibres est revêtu sur sa face extérieure (18) par une enveloppe métallique (29) formant la surface extérieure du bord d'attaque (1) de l'aile, une couche intermédiaire (30) supplémentaire à faible cisaillement en matériau élastomère (28) étant disposée entre le matériau renforcé par des fibres et l'enveloppe métallique (29).

13. Bord d'attaque (1) d'une aile selon l'une quelconque des revendications précédentes, **caractérisé en ce que** le matériau renforcé par des fibres est revêtu sur sa face intérieure par une matière thermoplastique avec une résistance élevée aux chocs.

14. Bord d'attaque (1) d'une aile selon l'une quelconque des revendications précédentes, **caractérisé en ce que** ledit au moins un actionneur (10) entre en contact avec la peau (2) par l'intermédiaire d'un raidisseur (12) qui s'étend dans la zone (7) le long du bord d'attaque (1) de l'aile, d'autres raidisseurs (11, 13-16), supportés par la structure porteuse (8) et s'étendant le long du bord d'attaque (1) de l'aile, pouvant être montés en option dans le bord d'attaque (1) sur la peau (2).

15. Avion comportant au moins une aile portante qui comporte un bord d'attaque (1) selon l'une des revendications précédentes.
